# EUROPEAN PATENT APPLICATION

(11) **EP 4 484 262 A1**
(43) Date of publication of application: **01.01.2025**
(21) Application number: 24184067.7
(22) Date of filing: 24.06.2024
(51) Int. Cl.: B62D 35/00

(54) **A TRACTOR-TRAILER COMBINATION OR A SINGLE CHASSIS TYPE TRUCK HAVING A CARGO BOX, AND TRACTOR FOR SUCH A TRACTOR-TRAILER COMBINATION**

(30) Priority: 28.06.2023 NL 2035206
(71) Applicant: DAF Trucks N.V., 5643 TW Eindhoven (NL)
(72) Inventor: VAN DEN HEIJKANT, Rob Adrianus Johannes, 5643 TW Eindhoven (NL); VAN DIJK, Niek Jan Gerard, 5643 TW Eindhoven (NL); RENTEMA, Date Willem Egbert, 5643 TW Eindhoven (NL)
(74) Representative: V.O.

(57) **Abstract**

A tractor-trailer combination or a single chassis type truck having a cargo box. The tractor-trailer combination or the single chassis type truck comprises a driver cabin including a cabin roof. The trailer or the cargo box being higher than the cabin roof. The cabin roof has a front edge and a means for reducing aerodynamic drag arranged on the cabin roof. The means for reducing aerodynamic drag are only formed by a roof rim arranged on the cabin roof behind the front edge of the cabin roof. The roof rim extends substantially along the whole width of the cabin roof. The roof rim is a concavely curved strip having a lower edge engaging the cabin roof, the concavely curved strip extending from the cabin roof such that, with regard to the lower edge, a top edge of the concavely curved strip is positioned in front of the lower edge when seen in normal driving direction of the tractor-trailer combination or the single chassis type truck having a cargo box. A tractor for such a tractor-trailer combination.

## Description

The invention relates to a tractor-trailer combination or a single chassis type truck having a cargo box, the tractor or the single chassis type truck comprising a driver cabin including a cabin roof, the trailer or the cargo box being higher than the cabin roof, the cabin roof having a front edge when seen in normal driving direction of the tractor or the single chassis type truck, and a means for reducing aerodynamic drag arranged on the cabin roof, the means for reducing aerodynamic drag only being formed by a roof rim arranged on the cabin roof behind the front edge of the cabin roof, the roof rim extending substantially along the whole width of the cabin roof.

Such a tractor-trailer combination or a single chassis type truck is for example known from GB1576972. In this known tractor-trailer combination or single chassis type truck an aerodynamic drag reducing plate is disposed on the cabin roof. Air flow impinges on the drag reducing plate which slants so that the slant angle increases stepwise or continuously from a front edge towards a rear edge of the cabin roof in order to reduce the aerodynamic drag which is generated when the tractor-trailer combination or the single chassis type truck travels forwardly. Although the drag reducing plate of this known tractor-trailer combination or the single chassis type truck reduces aerodynamic drag it is a continuing desire in the field to even further reduce aerodynamic drag to improve fuel economy of a tractor or the single chassis type truck or to reduce aerodynamic drag in a more economical manner.

It is an object of the present invention to provide an alternative tractor-trailer combination or single chassis type truck comprising an aerodynamic drag reducing member with which the aerodynamic drag can be reduced further and/or more economical.

According to the invention this object is obtained by a tractor-trailer combination or a single chassis type truck having a cargo box according to claim 1. The present invention is based on the insight that although such a concavely curved strip, in comparison to a tractor-trailer combination or a single chassis type truck having a cargo box without such a concavely curved strip, increases the aerodynamic drag when the single chassis type truck has a cargo box lower than the cabin roof or the tractor pulls a trailer having a height lower than the height of the cabin roof (or no trailer being present at all), such a concavely curved strip appears to be able to decrease the aerodynamic drag when the tractor pulls a trailer having a height higher than the height of the cabin roof to such an extent that the obtained benefits outweigh the disadvantage when used on a tractor without a trailer or a trailer lower than the drivers cabin. The present invention is also based on the insight that in case the single chassis type truck has a cargo box which is higher than the driver cabin, such a concavely curved strip appears to be an economical manner to decrease the aerodynamic drag thereby improving fuel economy of the single chassis type truck having a cargo box.

In an embodiment of a tractor-trailer combination or of a single chassis type truck having a cargo box according to the invention the cabin roof has an inclination of less than about 20° with the horizontal, preferably the cabin roof is substantially horizontal. In particular when used with tractor-trailer combinations or single chassis type trucks with a cargo box having a cabin roof with an inclination of less than about 20° with the horizontal or preferably an at least substantially horizontal, or flat, cabin roof, such a concavely curved strip appears to reduce aerodynamic drag in an efficient manner. Especially when the cabin roof is designed for providing an attached flow during driving, i.e. for cabin roofs having a rounded front-edge the benefit of such a concavely curved strip can typically be up to 3.0% CO₂ reduction in VECTO (i.e. with a 4m high semi-trailer. VECTO: VECTO (Vehicle Energy Consumption calculation Tool) is a simulation tool developed by the European Commission and is used for determining CO₂ emissions and Fuel Consumption from Heavy Duty Vehicles (trucks, buses and coaches) with a Gross Vehicle Weight above 3500kg) while the fuel consumption penalty is less than 1% for tractors driving with a trailer lower than the cabin or no trailer at all.

In a further embodiment of a tractor-trailer combination a single chassis type truck having a cargo box according to the invention the top edge of the roof rim extends at a height from the cabin roof of less than 70 mm and wherein the roof rim is arranged at a distance from the front edge of the cabin roof for creating a separation bubble which results in reducing an air stagnation area on a trailer or a cargo box. It appears that with such a relatively low roof rim the separation bubble created when the tractor-trailer combination or the single chassis type truck having a cargo box travels forwardly substantially reduces the stagnation area, thus reducing aerodynamic drag and improving fuel economy and providing a reduction in CO₂ emissions. The distance from the front edge of the cabin roof for creating such a separation bubble depends on the actual height of the roof rim, where the distance from the front edge is smaller when the height of the roof rim is smaller for creating comparable separation bubbles. Preferably, the distance from the front edge of the cabin roof is less than 300 mm.

In a further embodiment of a tractor-trailer combination or of a single chassis type truck having a cargo box according to the invention the roof rim is a concavely curved strip and wherein the top edge of the concavely curved strip is positioned 10 ± 2 mm in front of the lower edge of the concavely curved strip when seen in normal driving direction of the tractor or the single chassis type truck having a cargo box. Such a concavely curved strip creates a comparable drag penalty e.g. for tractors driving without a trailer or with driving with a trailer which is lower than the cabin, but it appears that fuel consumption and reduction of CO₂ emissions are improved more by such a concavely curved strip since the separation bubble created by such a concavely curved strip when the tractor-trailer combination or the single chassis type truck having a cargo box is driving appears to be enlarged in particular at the sides of the cabin roof leading to an increased drag reduction.

The invention also relates to a tractor for a tractor-trailer combination according to any one of the preceding claims, wherein the tractor comprises the driver cabin including the cabin roof, the cabin roof having a front edge when seen in normal driving direction of the tractor, and the roof rim being arranged on the cabin roof behind the front edge of the cabin roof, the roof rim extending substantially along the whole width of the cabin roof, the roof rim being a concavely curved strip having a lower edge engaging the cabin roof, the concavely curved strip extending from the cabin roof such that, with regard to the lower edge, a top edge of the concavely curved strip is positioned in front of the lower edge when seen in normal driving direction of the tractor.

The invention will be further explained with reference to the Figures, in which a non-limiting exemplary embodiment of according to the invention is shown:
Fig. 1 schematically shows a single chassis type truck having a cargo box comprising a driver cabin including a cabin roof indicating air flows during driving; Fig. 2 schematically shows the creation of a separation bubble by a concavely curved strip as roof rim for a single chassis type truck according to the invention ; and
Fig. 3 schematically shows a detail of the embodiment of Figure 2 indicating position and height of the concavely curved strip.

Below the invention will be described in more detail with regard to a single chassis type truck having a cargo box (also called a vehicle of the truck class 4 according to the VECTO classification) which is higher than the driver cabin. It will be clear that the invention is also applicable to a tractor for a tractor -trailer combination.

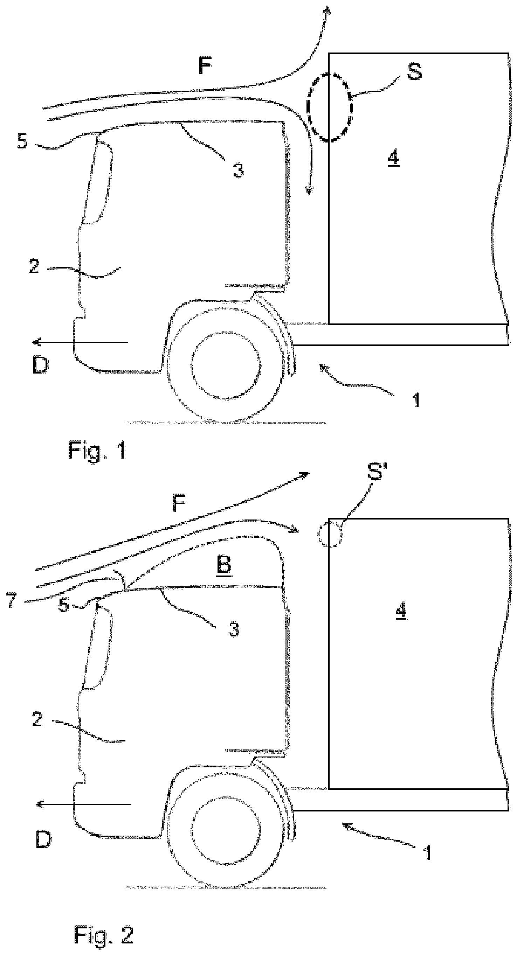

In Fig. 1 the single chassis type truck 1 with the cargo box 4 is schematically shown in side view. The single chassis type truck 1 comprises a driver cabin 2 having a cabin roof 3. The cabin roof 3 has a front edge 5 when seen in normal driving direction D of the single chassis type truck 1. With arrows F the air flows air schematically indicated when the single chassis type truck 1 having a cargo box 4 is driving. As is indicated in Fig. 1 an air stagnation area S is created on the front surface of the cargo box 4 which increases air drag and thus is disadvantageous for fuel economy.

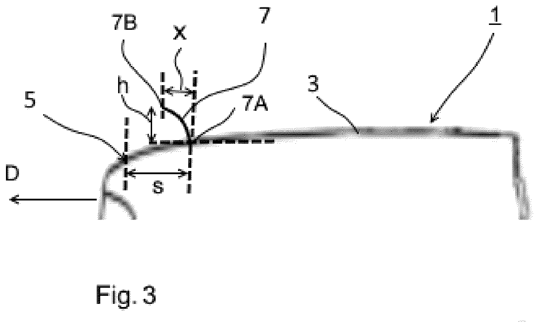

In Fig. 2 an embodiment of a single chassis type truck 1 according to the invention is schematically shown in side view, in which a concavely curved strip 7 is arranged on the cabin roof 3 behind the front edge 5 of the cabin roof 3 for reducing aerodynamic drag. The concavely curved strip 7 extends substantially along the whole width of the cabin roof 3. The concavely curved strip 7 is indicated in more detail in Figure 3 and has a lower edge 7A engaging the cabin roof 3. The concavely curved strip 7 has a lower edge 7A engaging the cabin roof 3 and extends from the cabin roof 3 such that, with regard to the lower edge 7A, a top edge 7B of the concavely curved strip 7 is positioned at a distance x = 10 ± 2 mm in front of the lower edge 7A of the concavely curved strip 7 when seen in normal driving direction D of the single chassis type truck.

In the embodiments shown in Figures 2 and 3the cabin roof 3 is a substantially flat cabin roof 3, i.e. a cabin roof 3 which is positioned substantially horizontal, however the invention is applicable to embodiments in which the cabin roofs have an inclination of less than 20° with regard to the horizontal.

In the embodiment of Fig. 3 the top edge 7B of the concavely curved strip7 extends at a height h from the cabin roof 3 which is less than 70 mm. The lower edge7A of the concavely curved strip7 is arranged at a distance s from the front edge 5 of the cabin roof 3 less than 300 mm for creating a separation bubble B (indicated in Fig. 2) that produces a reduced air stagnation area S' on the cargo box 4 thus reducing aerodynamic drag and improving fuel economy and providing a reduction in CO₂ emissions. The front edge 5 from which the distance s to the lower edge of the strip is calculated, is defined by the negative pressure peak at the cabin roof front.

In the embodiment of the concavely curved strip 7, in comparison to a tractor or single chassis type truck 1 without such a concavely curved strip as shown in Fig. 1, the aerodynamic drag is increased when the tractor pulls a trailer having a height lower than the height of the cabin roof 3 (or no trailer being present at all) or when the single chassis type truck 1 has a cargo box lower than the cabin roof. However the embodiment of the concavely curved strip 7 decreases the aerodynamic drag when the single chassis type truck 1 has a cargo box higher than the cabin roof 3 to such an extent that the obtained benefits outweigh the disadvantage of increased aerodynamic drag when used on a tractor without a trailer or a trailer lower than the drivers cabin or a single chassis type truck with a low cargo box.

## Claims

1. A tractor-trailer combination or a single chassis type truck (1) having a cargo box (4), the tractor-trailer combination or the single chassis type truck (1) having a cargo box (4) comprising a driver cabin (2) including a cabin roof (3), the trailer or the cargo box (4) being higher than the cabin roof (3), the cabin roof (3) having a front edge (5) when seen in normal driving direction (D) of the tractor-trailer combination or the single chassis type truck (1) having a cargo box (4), and a means for reducing aerodynamic drag arranged on the cabin roof (3), the means for reducing aerodynamic drag only being formed by a roof rim arranged on the cabin roof (3) behind the front edge (5) of the cabin roof (3), the roof rim extending substantially along the whole width of the cabin roof (3), **characterized in that** the roof rim is a concavely curved strip (7) having a lower edge (7A) engaging the cabin roof (3), the concavely curved strip (7) extending from the cabin roof (3) such that, with regard to the lower edge (7A), a top edge (7B) of the concavely curved strip (7) is positioned in front of the lower edge (7A) when seen in normal driving direction (D) of the tractor-trailer combination or the single chassis type truck (1) having a cargo box (4).

2. A tractor-trailer combination or a single chassis type truck (1) having a cargo box (4) according to claim 1, wherein the cabin roof (3) has an inclination of less than about 20° with the horizontal, preferably wherein the cabin roof (3) is at least substantially horizontal.

3. A tractor-trailer combination or a single chassis type truck (1) having a cargo box (4) according to claim 1 or 2, wherein the top edge (7B) of the concavely curved strip (7) extends at a height from the cabin roof (3) of less than 70 mm and wherein the the concavely curved strip (7) is arranged at a distance from the front edge (5) of the cabin roof (3) for creating a separation bubble (B) which results in reducing an air stagnation area (S') on a trailer or a cargo box (4).

4. A tractor-trailer combination or a single chassis type truck (1) having a cargo box (4) according to claim 3, wherein the distance from the front edge (5) of the cabin roof (3) is less than 300 mm.

5. A tractor-trailer combination or a single chassis type truck (1) having a cargo box (4) according to any one of the preceding claims, wherein the top edge (7B) of the concavely curved strip (7) is positioned 10 ± 2 mm in front of the lower edge (7A) of the concavely curved strip (7) when seen in normal driving direction (D) of the tractor-trailer combination or the single chassis type truck (1) having a cargo box (4).

6. A tractor for a tractor-trailer combination according to any one of the preceding claims, wherein the tractor comprises a driver cabin (2) including a cabin roof (3), the cabin roof (3) having a front edge (5) when seen in normal driving direction (D) of the tractor, and a roof rim being arranged on the cabin roof (3) behind the front edge (5) of the cabin roof (3), the roof rim extending substantially along the whole width of the cabin roof (3), the roof rim being a concavely curved strip (7) having a lower edge (7A) engaging the cabin roof (3), the concavely curved strip (7) extending from the cabin roof (3) such that, with regard to the lower edge (7A), a top edge (7B) of the concavely curved strip (7) is positioned in front of the lower edge (7A) when seen in normal driving direction (D) of the tractor.
